# EUROPÄISCHE PATENTSCHRIFT

(11) **EP 3 073 655 B1**
(45) Veröffentlichungstag und Bekanntmachung des Hinweises auf die Patenterteilung: **29.11.2017**
(21) Anmeldenummer: 16162028.1
(22) Anmeldetag: 23.03.2016
(51) Int. Cl.: H04B 17/391

(54) **KANALEMULATOR UND PRÜFSYSTEM FÜR KOMMUNIKATIONSTEILNEHMER**
CHANNEL EMULATOR AND TEST SYSTEM FOR COMMUNICATION PARTICIPANTS
EMULATEUR DE CANAL ET SYSTEME DE CONTROLE POUR ABONNE DE COMMUNICATION

(30) Priorität: 25.03.2015 DE 102015104530
(43) Veröffentlichungstag der Anmeldung: 28.09.2016
(73) Patentinhaber: Helmut-Schmidt-Universität, 22043 Hamburg (DE); Hamburg Innovation GmbH, 21079 Hamburg (DE)
(72) Erfinder: Scholl, Gerd, 22393 Hamburg (DE); Heynicke, Ralf, 23909 Ratzeburg (DE); Krush, Dmytro, 22043 Hamburg (DE); Cammin, Christoph, 21107 Hamburg (DE)
(74) Vertreter: Maiwald Patentanwalts GmbH

(56) Entgegenhaltungen:
- US-A1- 2014 086 079

## Beschreibung

Die Erfindung betrifft einen Kanalemulator und ein Prüfsystem für Kommunikationsteilnehmer oder Kommunikationssysteme.

### Stand der Technik

In der Fertigungsautomatisierung kommuniziert eine oder mehrere zentrale Basisstationen in einer sternförmigen Topologie bidirektional mit einer Vielzahl weiterer Teilnehmer. Als Kommunikationsmedium werden typischerweise ein oder mehrere Funkkanäle verwendet. Um diese Kanäle optimal nutzen zu können, werden sie zusätzlich nach dem TDMA-Verfahren in Zeitschlitze aufgeteilt. Ein Kanal ist für die Dauer eines jeden Zeitschlitzes für den Zugriff durch genau einen Teilnehmer nutzbar.

Ein solches Kommunikationssystem ist für einen reibungslosen Anlauf der Fertigung kritisch. Bei einem auch nur teilweisen Ausfall der Kommunikation drohen unmittelbar Produktionsausfälle. Daher ist es wünschenswert, das Kommunikationssystem vor der Inbetriebnahme auch unter den dynamischen Umgebungsbedingungen der Produktion testen zu können.

Für den Test von Mobilfunkendgeräten und WLAN-Geräten sind Geräte zur Emulation eines Funkkanals am Markt verfügbar. Diese mischen das Signal eines Senders in ein Basisband, digitalisierten es und prägen ihm über digitale Signalverarbeitung im Basisband eine frequenzabhängige Dämpfung und optional weitere Störungen auf. Anschließend wird das Signal wieder digital-analog gewandelt und in seinen ursprünglichen Frequenzbereich hochgemischt. Des weiteren gibt es Geräte welche direkt im Basisband Signale digital erzeugen, weiter bearbeiten und an das zu testende Gerät übertragen. Der Weg über die digitale Signalverarbeitung macht diese Geräte nicht nur teuer, vor allem wenn viele Kommunikationsteilnehmer berücksichtigt werden sollen. Auf Grund der langen Signalverarbeitungszeiten sind solche Geräte auch ungeeignet für die Fertigungsautomatisierung.

Aus der US 7,349,670 B2 sind Funkkanalemulatoren bekannt, die mit programmierbaren analogen Abschwächern arbeiten. Damit können die geringen Latenzzeiten, die in der Fertigungsautomatisierung gefordert sind, erreicht werden. Allerdings wächst der Geräte- und Verkabelungsaufwand im Wesentlich quadratisch mit der Anzahl der angeschlossenen Teilnehmer. Es lassen sich einzelne Geräte oder auch einfache Zusammenschaltungen mehrerer Geräte auf Einhaltung vorgegebener Spezifikationen prüfen, es ist jedoch nicht möglich, eine Kommunikationssystem in der Größenordnung von über 100 Teilnehmern in seiner Gesamtheit zu prüfen.

Aus der DE 100 25 838 ist ein Verfahren zur Echtzeit-Simulation von Fadingbedingungen durch Mehrwegeausbreitung eines Mobilfunksignals für das Testen von Mobilfunk-Empfängern bekannt, bei dem das in digitaler Form im Basisband verfügbare komplexe Sendesignal mit einem komplexen Fadingsignal moduliert wird, das durch Monte-Carlo-Simulation als Summe einer begrenzten Anzahl von Einzelpfaden erzeugt wird, deren charakteristische Parameter dynamisch stochastisch geändert werden.

Aus der US 2014/086 079 A1 ist ein weiterer Kanalemulator bekannt, mit dem sich die Ausbreitungsbedingungen der Funkübertragung zwischen beliebigen angeschlossenen Teilnehmern simulieren lassen. Das Zeitprogramm, nach dem die Bedingungen geändert werden, wird dem Kanalemulator als Datei ("playback file") zugeführt, die beispielsweise an Hand von Protokolldateien aus der Beobachtung eines realen Netzwerkbetriebs generiert werden kann.

### Aufgabe und Lösung

Es ist daher die Aufgabe der Erfindung, Mittel bereitzustellen, mit denen sich auch größere Kommunikationssysteme in ihrer Gesamtheit prüfen lassen.

Diese Aufgabe wird erfindungsgemäß gelöst durch gesteuerte Kanalemulatoren gemäß Hauptanspruch, ein Prüfgerät und eine Prüfanordnung gemäß Nebenansprüchen sowie durch ein Verfahren gemäß weiterem Nebenanspruch. Weitere vorteilhafte Ausgestaltungen ergeben sich aus den darauf rückbezogenen Unteransprüchen.

### Gegenstand der Erfindung

Im Rahmen der Erfindung wurde ein Kanalemulator für ein TDMA- oder F/TDMA-Kommunikationssystem mit einer Vielzahl von Teilnehmern entwickelt. In diesem Kommunikationssystem ist mindestens ein Medium in Zeitschlitze unterteilt und für die Dauer eines jeden Zeitschlitzes von genau einem Teilnehmer nutzbar. Der Kanalemulator enthält mindestens einen Abschwächen mit variabler Abschwächung und / oder mindestens einen Verstärker mit variabler Verstärkung.

Erfindungsgemäß ist eine Umschalteinrichtung vorgesehen, die vor Beginn eines jeden Zeitschlitzes dem Teilnehmer, der das Medium während des Zeitschlitzes nutzt, und/oder dem Teilnehmer, für den eine während dieses Zeitschlitze übermittelte Nachricht bestimmt ist, einen Wert für die Abschwächung beziehungsweise Verstärkung zuordnet und am Abschwächen beziehungsweise Verstärker einstellt.

Welcher der Teilnehmer das Medium während des Zeitschlitzes nutzt, kann beispielsweise durch eine Vorabreservierung oder durch eine zyklische Reihenfolge festgelegt sein. Ein Teilnehmer kann aber beispielsweise auch in stochastischer bzw. statistischer Weise mit der Nutzung beginnen und, wenn sich das Medium dabei als nicht belegt erweist, diese Nutzung beispielsweise für ein vordefiniertes Zeitintervall fortsetzen oder aber so lange, wie er das Medium benötigt. In letzterem Fall kann er es nach der Nutzung beispielsweise explizit für die Nutzung durch andere Teilnehmer freigeben. Beispielsweise beginnen die Teilnehmer von Thin-Ethernet-Netzwerken in statistischer bzw. stochastischer Weise mit der Nutzung des Mediums.

Ein Teilnehmer muss nicht unbedingt ein separates physisches Gerät sein. Insbesondere kann ein einziges physisches Gerät eine Vielzahl von Teilnehmern emulieren, d.h. die gleichen Signale in gleicher Zeitfolge und unter Nutzung des gleichen Arbeitsfrequenz senden, als wären die emulierten Geräte physisch vorhanden und in das Kommunikationssystem eingebunden. Emulierte Teilnehmer sind im Rahmen der vorliegenden Erfindung physisch vorhandenen Teilnehmern ausdrücklich gleichgestellt.

Es wurde erkannt, dass auf diese Weise eine Funkübertragung zwischen einer zentralen Basisstation und einer Vielzahl von weiteren Teilnehmern mit deutlich geringerem apparativem Aufwand emuliert werden kann als dies nach dem bisherigen Stand der Technik möglich war. Für eine Arbeitsfrequenz ist nur noch ein Absobwäctrter bzw. Verstärker notwendig. Für einen Uplink-Kanal, auf dem die weiteren Teilnehmer Daten an die zentrale Basisstation übermitteln, ordnet die Umschalteinrichtung sinnvollerweise vor Beginn eines jeden Zeitschlitzes dem Teilnehmer, für den das Medium während des Zeitschlitzes reserviert ist, den Wert für die Abschwächung bzw. Verstärkung zu. Das Signal erreicht die Basisstation dann in einem Maße abgeschwächt, wie es aufgrund der Entfernung zwischen dem Teilnehmer und der Basisstation sowie aufgrund der Mehrwegeausbreitung auf dieser Funkstrecke zu erwarten ist. Für einen Downlink-Kanal von der Basisstation zu den anderen Teilnehmern ordnet die Umschalteinrichtung sinnvollerweise den Teilnehmer, für den eine während des Zeitschlitzes übermittelte Nachricht bestimmt ist, den Wert für die Abschwächung bzw. Verstärkung zu. Das Signal der Basisstation erreicht dann den Teilnehmer ebenfalls in dem Maße abgeschwächt, wie es aufgrund der Gegebenheiten auf der Funkstrecke zu erwarten ist.

Der drastisch verringerte apparative Aufwand macht es erstmals möglich, große Kommunikationssysteme mit über hundert Teilnehmern in ihrer Gesamtheit auch unter den dynamischen Umgebungsbedingungen zu prüfen. Bislang konnten nur Zusammenschaltungen einiger weniger Teilnehmer geprüft werden. Damit bestand immer noch ein Restrisiko, dass im Zusammenspiel mit weiteren Teilnehmern im Produktivbetrieb des Systems Fehler auftreten. Einige Fehlerarten machen sich erst ab einer kritischen Teilnehmerzahl als spürbare Ausfälle bemerkbar. So fällt es zunächst nicht weiter auf, wenn einzelne Datenpakete durch nicht exakte Einhaltung der Zeitschlitze mit anderen Datenpaketen kollidieren und verloren gehen; die zerstörten Pakete werden durch die Fehlerkorrekturmechanismen des Protokolls erkannt und erneut übertragen. Läuft das System dagegen mit allen vorgesehenen Teilnehmern unter voller Auslastung, führen diese wiederholten Übertragungen dazu, dass die Gesamtleistung drastisch einbricht.

Vorteilhaft beträgt die Zeitdauer, die die Umschalteinrichtung für das Zuordnen und Einstellen benötigt, wenige Mikrosekunden, beispielsweise höchstens 5 µs, bevorzugt höchstens 3µs. Damit lassen sich die hohen Anforderungen der Fertigungsautomatisierung im Hinblick auf Latenzzeiten erfüllen. Herkömmliche Funkkanalemulatoren auf der Basis der digitalen Signalverarbeitung benötigen hingegen Zeiten im Bereich von Millisekunden um auf eine neue Verstärkung bzw. Abschwächung umgestellt zu werden. In der Mobilfunktechnik (GSM) sind die Anforderungen an die Latenzzeit deutlich niedriger: hier sind Umschaltzeiten bis 30 µs gängig.

Vorteilhaft enthält die Umschalteinrichtung mindestens eine PIN-Diode, einen FET-Schalter, hybride Ausführungsformen hiervon, und/oder einen MEMS-Schalter. Derartige Schaltelemente schalten besonders schnell.

Der Kanalemulator benötigt eine Information, wann welcher Zeitschlitz stattfindet. Dazu kann er beispielsweise eine genaue Uhr enthalten und anhand der von dieser Uhr ausgegebenen Systemzeit bestimmen, welcher Zeitschlitz gerade stattfindet. Eine solche Uhr kann jedoch mit der Zeit vom Takt der Zeitschlitze im Kommunikationssystem wegdriften. In einer besonders vorteilhaften Ausgestaltung der Erfindung weist der Kanalemulator daher einen Eingang für ein Synchronisationssignal, das den Takt der Zeitschlitze im Kommunikationssystem vorgibt, und/oder einen Ausgang für ein solches Synchronisationssignal zur Vorgabe dieses Takts an mindestens ein anderes Gerät auf.

In einer besonders vorteilhaften Ausgestaltung ist ein Modul vorgesehen ist, das ein Synchronisationssignal durch das Abhören eines Mediums ermittelt. Beispielsweise kann dasjenige Medium abgehört werden, auf dem eine zentrale Basisstation Daten auf einem Downlink-Frequenzband an die anderen Teilnehmer sendet. Dies steht im Einklang damit, dass in einem derartigen Kommunikationssystem die zentrale Basisstation das bestimmende Element ist.

Im Rahmen der Erfindung wurde ein Prüfgerät für einen Teilnehmer an einem TDMA- oder F/TDMA-Kommunikationssystem entwickelt. Dieses Prüfgerät enthält mindestens einen erfindungsgemäßen Kanalemulator sowie mindestens ein Modul zur Erzeugung und/oder zum Empfang von Testsignalen. Dabei ist der Takt der Zeitschlitze zwischen diesem Modul und dem Kanalemulator synchronisiert. Das Modul ist über den Kanalemulator mit dem zu prüfenden Teilnehmer verbindbar. Das Modul kann genauso aufgebaut sein wie die zentrale Basisstation oder wie ein weiterer Teilnehmer an dem Kommunikationssystem. Es kann sich aber auch um ein eigens für Testzwecke angefertigtes Modul handeln, das im normalen Betrieb des Kommunikationssystems nicht vorkommende Testsignale ausgibt.

Ein Standard für ein Kommunikationssystem kann eine Interoperabilität zwischen Geräten verschiedener Herstellen nur dann garantieren, wenn alle beteiligten Geräte bzw. Teilnehmer die Spezifikation des Standards einhalten. Das erfindungsgemäße Prüfgerät ist erheblich preiswerter als die bislang notwendige Kombination aus einem Funkkanalemulator auf der Basis der digitalen Signalverarbeitung und einen hiervon separaten Protokollanalysator. Da jeder Hersteller, der sich dem Standard anschließen will, eine Prüfung der Iiateroperabilität seiner Geräte benötigt, vermindert die Erfindung die Einstiegshürde in den Standard spürbar.

In einer besonders vorteilhaften Ausgestaltung der Erfindung umfasst das Prüfgerät eine (halb-)absorbierende Messkammer und/oder eine Modenverwirbelungskammer, über die der Kanalemulator per Funk mit dem zu prüfenden Teilnehmer verbindbar ist. Dann können auch solche Teilnehmer getestet werden, die keine zugängliche Antennenbuchse oder vergleichbare Anschlusstmöglichkeit für eine Kabelverbindung zum Kanalemulator haben.

Um hierbei vergleichbar reproduzierbare Testergebnisse zu erhalten wie bei einer Kabelverbindung, sollten reproduzierbare, definierte bzw. zumindest stochastisch definierbare Feldumgebungen für die Teilnehmer beschaffen werden. Eine solche Feldumgebung kann beispielsweise durch den Einsatz einer (halb-)absorbierenden Messkammer oder einer Modenverwirbelungskammer geschehen.

Eine halbabsorbierende Kammer besteht im Wesentlichen aus einem elektromagnetisch abgeschirmten Raum mit Hochfrequenzabsorbern an den Wänden und der Decke und einem hoch leitfähigen Boden. Zudem befindet sich darin mindestens eine Antenne zur Ein- bzw. Auskopplung elektromagnetischer Felder. Häufig sind noch weitere Einrichtungen, wie etwa Drehteller und Positionierer, vorhanden, um die Ausrichtung der Antenne zum Teilnehmer zu verändern. Eine vollabsorbierende Kammer unterscheidet sich von einer halbabsorbierenden lediglich darin, dass anstatt eines leitfähigen Bodens dieser ebenfalls möglichst absorbierend gestaltet ist.

Eine (halb-)absorbierende Messkammer hat den Vorteil, dass zu jeder Zeit deterministisch eine gewünschte Feldstärke in einem Prüfvolumen eingestellt werden kann bzw. ein konstanter Prüfpegel definierbar ist. Zudem ist durch die Ausrichtung und Positionierung des Teilnehmers relativ zur feldanregenden Antenne in der Kammer stets eine Richtungsinformation gegeben, die z.B. zu einem Richtdiagramm des Teilnehmers zugeordnet werden kann. Allerdings wird dies damit erkauft, dass der Teilnehmer - prinzipiell - für jede Polarisation und jede Ausrichtung zur anregenden Antenne zu prüfen ist. In der Praxis wird z.B. bei zwölf Ausrichtungen und jeweils zwei Polarisationsrichtungen gemessen. Daraus ergibt gegenüber einer einzelnen Messung die 24-fache Messzeit. Dabei ist die Aussagekraft über das Abstrahlverhalten des Teilnehmers bezüglich anderer diskreter Richtungen nicht zwingend.

Eine Modenverwirbelungskammer arbeitet hingegen nach einem grundlegend anderen Prinzip. Wände, Decke und Boden sind aus hoch leitfähigen Material anstatt Ahsarbertnaterial. Damit stellt eine Modenverwirbelungskammer zunächst einen Holxlraumresorzator dar. Ebenfalls wie in einer Absorberkammer gibt es im Inneren neben dem zu prüfenden Teilnehmer auch mindestens eine Antenne zur Felderzeugung. Zusätzlich gibt es eine Einrichtung zur Änderung der Randbedingungen dieses Holalrautmresonators bzw. zur "Modenverwirbelung". Dies kann beispielsweise ein Rührer bzw. Modenquirl aus leitfähigem Material sein, der mechanisch gedreht bzw. bewegt wird. Dadurch ergeben sich für jede Position unterschiedliche Moden, die angeregt werden, bzw. unterschiedliche Reflexionen. Infolgedessen verändert sich mit der Bewegung das elektromagnetische Feld am Teilnehmer in Stärke, Richtung bzw. Polarisation. In einer idealen Modenverwirbelungskammer soll das elektromagnetische Feld am Teilnehmer über einen vollständigen Bewegungszyklus stochastisch unpolarisiert und stochastisch isotrop mit rayleighverteilter oder stochastisch definierter Feldstärke sein.

Infolge der intendierten großen Anzahl von Reflexionen ist bei der Messung in einer Modenverwirbelungskammer keine Richtungsinformation über eine elektromagnetische Welle vorhanden. Daher können keine Aussagen über die Richtcharakteristik eines zu prüfenden Teilnehmers getroffen werden. Auf der anderen Seite werden statistisch alle einfallenden Richtungen und Polarisationen mit einer einzigen Messung erfasst.

Diese Verhalten ist dem zu erwartenden Szenario in einer industriellen Umgebung, beispielsweise einer Fertigungsumgebung, deutlich ähnlicher, da auch dort auf Grund von Maschinen und vieler metallischer Flächen viele Reflexionen zu erwarten sind und darüber hinaus eine Einbauposition und Einbauorientierung z.B. von drahtlosen Sensoren nicht allgemein vorhergesagt werden kann. Somit wären zunächst alle möglichen Einfallsrichtungen und Polarisationen einer elektromagnetischen Welle auf den Sensor - zumindest stochastisch - zu betrachten. Da mit einer Modenverwirbelungskammer ein Worst-Case Szenario dargestellt werden kann wird von den Erfindern diese bevorzugt. Demgegenüber entspricht das Verhalten einer Absorberkammer quasi dem einer idealen Freiraumausbreitung.

Nichtsdestotrotz sind generell sowohl eine Absorberkammer als auch eine Modenverwirbelungskammer generell in der Lage, ein leitungsgebundenes Signal feldgekoppelt in einen Teilnehmer einzukoppeln bzw. dessen Antwort feldgekoppelt auszukoppeln, um sie in eine Leitung und damit in den Kanalemulator zurückzuspeisen.

In einer weiteren besonders vorteilhaften Ausgestaltung der Erfindung weist das Prüfgerät mehrere Kanalemulatoren auf. Weiterhin ist mindestens ein Kombinierer, Splitter/Koppler und/oder Zirkulator vorgesehen, über den die Kanalemulatoren gemeinsam mit dem zu prüfenden Teilnehmer verbindbar sind. Die verschiedenen Kanalemulatoren können insbesondere für verschiedene Arbeitsfrequenzen (Uplink-und/oder Downlink-Frequenzen) zuständig sein. Mit einem solchen Aufbau lässt sich das Signalgemisch aus verschiedenen Arbeitsfrequenzen, den der Teilnehmer im Produktiveinsatz in der Fertigungsanlage empfangen wird, realistisch nachbilden.

Im Rahmen der Erfindung wurde auch eine Prüfanordnung für ein TDMA- und/oder F/TDMA-Kommunikationssystem entwickelt. Dieses Kommunikationssystem weist einen zentralen Teilnehmer auf, der mit einer Vielzahl weiterer Teilnehmer bidirektional kommuniziert.

Erfingdungsgemäß ist mindestens ein erfindungsgemäßer Kanalemulator und/oder mindestens ein erfindungsgemäßes Prüfgerät zwischen den zentralen Teilnehmer und mindestens einen weiteren Teilnehmer geschaltet. Es kann dann ein jeder Teilnehmer und/oder der zentrale Teilnehmer geprüft werden.

In einer besonders vorteilhaften Ausgestaltung der Erfindung ist der Kanalemulator und/oder das Prüfgerät zwischen den zentralen Teilnehmer und mindestens zwei weitere Teilnehmer geschaltet. Die mindestens zwei weiteren Teilnehmer sind untereinander mit einer Leitung verbunden, und der Kanalemulator bzw. das Prüfgerät ist zwischen den zentralen Teilnehmer und die Leitung geschaltet. Diese Leitung kann beispielsweise bustörmig sein. Zusätzlich kann dann jeweils ein weiterer Kanalemulator zwischen die Leitungen geschaltet werden, um das jeweilige Übersprechen zu emulierten.

Der Kanalemulator und/oder das Prüfgerät wird dann mehrfach genutzt, und der Gesamtaufwand wächst nicht mehr quadratisch mit der Anzahl der Teilnehmer. Auf diese Weise lässt sich der Verkabelungsaufwand für eine drahtgebundene Realisierung der Prüfungsanordnung drastisch reduzieren. Gerade bei einem sternförmig aufgebauten Kommunikationssystem wäre dieser Aufwand normalerweise sehr hoch. Eine Leitung, die an den anzuschließenden Teilnehmern vorbeiführt und an die die Teilnehmer beispielsweise mit Splittern angeschlossen werden können, ist dagegen schnell verlegt.

Die Erfindung kommt in einer besonders vorteilhaften Ausgestaltung in einem schmalbandiges Funksystem als Kommunikationssystem zum Einsatz. Unter einem schmalbandigen System wird ein System verstanden, bei dem die Bandbreite des verwendeten Funkkanals kleiner ist als die Kohärenzbandbreite des zu emulierenden Funkkanals. Der Funkkanal kann dann als zu sich selbst ähnlich bzw. frequenzflach angenommen werden. Es sind dann keine Kanalentzerrer zum Ausgleich von Schwankungen der Übertragungsqualität innerhalb des Funkkanals erforderlich. Bei einem frequenzflachen Funkkanal können Schwankungen der Übertragungsqualität im Wesentlichen durch Schwankungen des Betrages der Übertragungsfunktion bei der Arbeitsfrequenz, also durch Schwankungen einer reellen Zahl, charakterisiert werden.

Bei dem erfindungsgemäßen Verfahren zum Betreiben der Prüfanordnung erfolgt die Einstellung der Abschwächung bzw. Verstärkung durch die Umschalteinheit während eines Schutzintervalls zwischen zwei Zeitschlitzen, innerhalb dessen keine Nutzdaten über das Medium übertragen werden. Dann wird die Übertragung während der Zeitschlitze durch die Prüfanordnung nicht beeinträchtigt. Die Länge des Schutzintervalls wird durch das jeweilige Kommunikationssystem vorgegeben und liegt typischerweise im einstellagen Mikrosekundenbereich.

Die Vereinfachung und damit kostengünstigere Ausführungsform des Prüfgeräts ergibt sich unter anderem dadurch, dass die Kanalemulation und die Koordination des wechselseitigen Zugriffs auf das Medium (MAC-Zugriff, HF-Protokoll) in einer Einheit zusammenfassbar sind. In die zeitabhängige Schaltung der Kanalemulatoren kann somit das Wissen eingehen, welcher Teilnehmer zu welcher Zeit im Downlink angesprochen werden bzw. im Uplink Daten zur Basisstation übertragen soll.

Für die Funkübertragung ein und desselben Signals können jeweils nicht nur eine Antenne, sondern mehrere Antennen gleichzeitig verwendet werden (MIMO-Technik), ohne dass sich dadurch an der generellen Funktionsweise der Erfindung etwas ändert.

Hochfrequenzleitungen können beispielsweise Hochfrequenzkabel oder auch Wellenleiter sein.

Unter einem Funkkanal wird allgemein eine drahtlose Übertragungsstrecke verstanden, auf der das übertragene Signal im Zeitbereich mit einer zeitvarianten Impulsantwort h(t,τ) gefaltet bzw. im Frequenzbereich mit einer zeitvarianten Übertragungsfunktion H(t,f) multipliziert wird. Da die Ausbreitung von Funkwellen von den Orten von Sender und Empfänger sowie von den Gegebenheiten auf der Strecke dazwischen abhängt, sind die Funktionen h(t,τ) und H(t,f) auch ortsabhängig.

### Spezieller Beschreibungsteil

Nachfolgend wird der Gegenstand der Erfindung anhand von Figuren erläutert, ohne dass der Gegenstand der Erfindung hierdurch beschränkt wird. Es ist gezeigt:
- Figur 1: schematischer Aufbau eines F/TDMA-Kommunikationssystems und mögliche Anordnung der Zeitschlitze.
- Figur 2: Prüfanordnung für das in Figur 1a gezeigte Kommunikationssystem gemäß eines Ausführungsbeispiels der Erfindung.
- Figur 3: schematischer Aufbau eines Kanalemulators und eines Moduls zur Erzeugung eines Synchronisationssignals gemäß der Erfindung.
- Figur 4: Ausführungsbeispiele von Prüfgeräten, die den Kanalemulator enthalten, gemäß der Erfindung.
- Figur 5: schematische Darstellung des Unterschieds zwischen schmalbandigen und breitbandigen Funksystemen.
- Figur 6: Praxistest des Kommunikationssystems in einer Umgebung mit zusätzlichen Nutzen des ISM-Bandes.
- Figur 7: Drahtlose Ankopplung eines zu testenden Teilnehmers in einer Modenverwirbelungskammer.
- Figur 8: Entkopplung von Datenströmen mit einem Zirkulator.
- Figur 9: Emulation verrauschter oder anderweitig gestörter Funkübertragung.
- Figur 10: Drahtlose Ankopplung einer zu testenden Basisstation in einer Modenverwirbelungskammer.

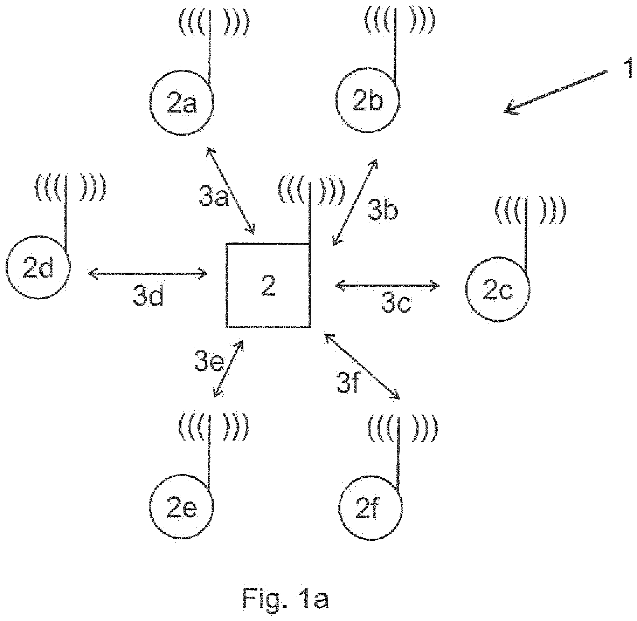

Figur 1a zeigt den schematischen Aufbau eines funkbasierten Kommunikationssystems 1 mit einer sternförmigen Anbindung der Teilnehmer 2a bis 2f an eine zentrale Basisstation 2. Die zentrale Basisstation 2 fungiert als zentraler Teilnehmer im System. Diese Basisstation 2 ist über Funkkanäle 3a, 3b bis 3f mit sechs weiteren Teilnehmern (Sensoren und Aktoren) 2a bis 2f verbunden. Der Teilnehmer 2a kommunizieren auf dem Funkkanal 3a, die Teilnehmer 2b bis 2f kommunizieren jeweils auf den Funkkanälen 3b, bis 3f mit der Basisstation 2. Alle Funkkanäle 3a bis 3f sind bidrektional, d.h. sie beinhalten jeweils einen Uplink von den Sensoren und Aktoren 2a bis 2f zur Basisstation 2 sowie einen Downlink von der Basisstation 2 zu den Sensoren und Aktoren 2a bis 2f.

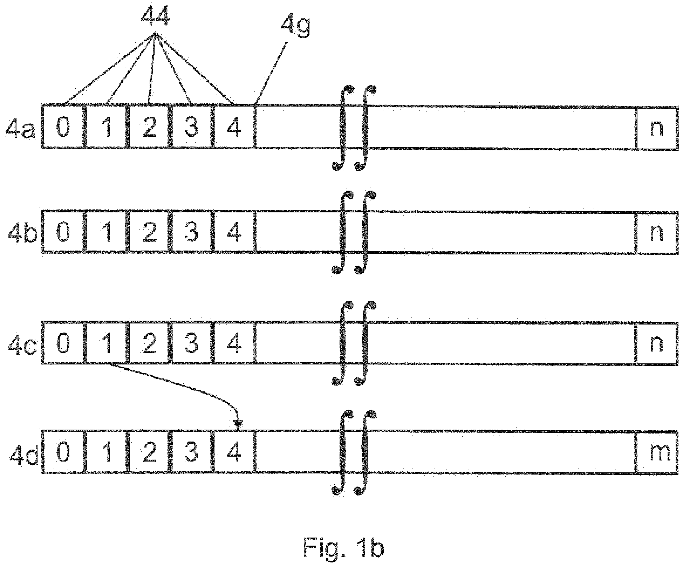

Figur 1b verdeutlicht die Aufteilung mehrerer Frequenzbänder 4a bis 4d in Zeitschlitze bei einem F/TDMA-Verfahren gemäß Stand der Technik. Die Zeit t läuft von links nach rechts, die Frequenz f von oben nach unten. In diesem Beispiel sind drei Uplink-Frequenzbänder 4a, 4b und 4c vorgesehen, auf denen die Teilnehmer 2a bis 2f Daten an die zentrale Basisstation 2 senden. Umgekehrt ist ein Downlink-Frequenzband 4d vorgesehen, auf dem die Basisstation Daten zu den Teilnehmern 2a bis 2f sendet. Jedes der Uplink-Frequenzbänder 4a bis 4c ist in n Zeitschlitze 44 unterteilt, und das Downlink-Frequenzband 4d ist in m Zeitschlitze 44 unterteilt, wobei m nicht gleich n sein muss. Dabei können die Zeitschlitze 44 zusätzlich durch Schutzintervalle 4g voneinander getrennt sein. Jeweils einer der Zeitschlitze 44 wird nicht für die Datenübertragung, sondern als Zeitpuffer für einen Frequenzwechsel genutzt, hier der erste Zeitschlitz. Die übrigen Zeitschlitze 44 sind abwechselnd den bidirektionalen Funkkanälen 3a bis 3f zugeordnet, d.h. die Basisstation 2 kommuniziert auf jedem der Frequenzbänder 4a bis 4d abwechselnd mit verschiedenen Sensoren bzw. Aktoren 2a bis 2f. Beispielsweise kann das Uplink-Frequenzband 4a im Zeitschlitz 1 dem Funkkanal 3a zugewiesen sein, d.h. auf ihm empfängt die Basisstation 2 während dieses Zeitschlitzes eine Information vom Sensor 2a. Im nächsten Zeitschlitz 2 kann das gleiche Uplink-Frequenzband 4a dem Funkkanal 3f zugewiesen sein, d.h. während dieses Zeitschlitze empfängt die Basisstation 2 eine Information vom Sensor 2f. Ebenso kann das Downlink-Frequenzband 4d beispielsweise im Zeitschlitz 1 dem Funkkanal 3c zugewiesen sein, d.h. während dieses Zeitschlitzes übermittelt die Basisstation 2 eine Information an den Sensor 2c. Im nächsten Zeitschlitz 2 kann das gleiche Downlink-Frequenzband 4d dem Funkkanal 3e zugewiesen sein, d.h. während dieses Zeitschlitzes übermittelt die Basisstation 2 eine Information an den Sensor 2e. Im Normalfall ist vorgesehen, dass die Basisstation 2 auf ein über eines der Uplink-Frequenzbänder 4a bis 4c empfangenes Datenpaket mit einem zeitlichen Versatz von einigen Zeitschlitzen später über das Downlink-Frequenzband 4d antwortet.

Die Frequenzumschaltung (hopping) wird genutzt, damit die Kommunikation nicht zusammenbricht, wenn einige der verwendeten Frequenzen von außen gestört bzw. durch Mehrwegeausbreitung die Empfangsfeldstärke zeitweise stark reduziert werden. Dies ist insbesondere dann wichtig, wenn Funkkanäle im 2,4-GHz-ISM-Band verwendet werden. Hier senden unter anderem auch WLAN-Netze. Sowohl die Frequenz des Downlink-Frequenzbandes 4d als auch die Frequenzen der Uplink-Frequenzbänder 4a bis 4c werden also ständig gewechselt.

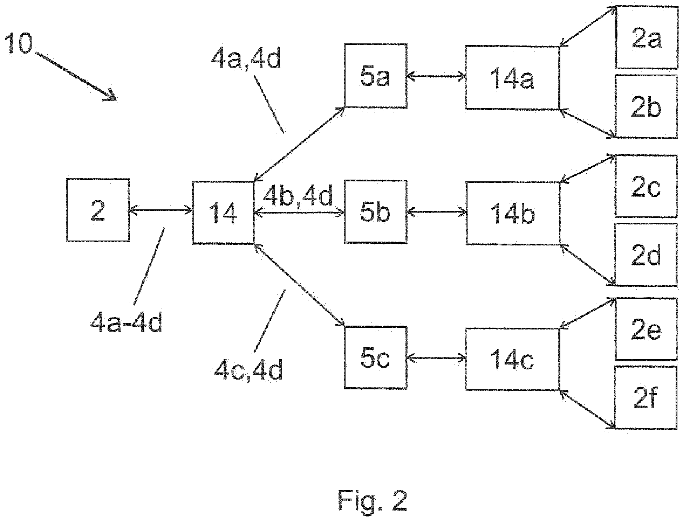

Figur 2 verdeutlicht die Prüfanordnung 10 zum Test des in Figur 1a gezeigten Kommunikationssystems 1. Die Funkantennen an der Basisstation 2 sowie an den weiteren Teilnehmern 2a bis 2f sind inaktiv. Stattdessen sind die Teilnehmer über Hochfrequenzleitungen miteinander verbunden. Die Basisstation 2 ist zunächst über Hochfrequenzleitungen, über die sowohl die drei Uplink-Frequenzbänder 4a bis 4c als auch das Downlink-Frequenzband 4d übertragen werden, mit einem ersten Splitter und Kombinierer 14 verbunden. Von hier aus werden das erste Downlink-Frequenzband 4a und das Uplink-Frequenzband 4d bidirektional zu einem ersten Kanalemulator 5a weitergeleitet, an dem über einen Splitter und Kombinierer 14a die Teilnehmer 2a und 2b angeschlossen sind. Das zweite Downlink-Frequenzband 4b und das Uplink-Frequenzband 4d werden bidirektional vom ersten Splitter und Kombinierer 14 zu einem zweiten Kanalemulator 5b weitergeleitet, an dem über einen Splitter und Kombinierer 14b die Teilnehmer 2c und 2d angeschlossen sind. Das dritte Downlink-Frequenzband 14c und das Uplink-Frequenzband 4d werden bidirektional vom ersten Splitter und Kombinierer 14 zu einem dritten Kanalemulator 5c weitergeleitet, an dem über einen Splitter und Kombinierer 14c die Teilnehmer 2e und 2f angeschlossen sind. Jedes Frequenzband 4a, 4b, 4c kann um eine Vielzahl weiterer Teilnehmer erweitert werden, ohne dass weitere Kanalemulatoren erforderlich wären. Zugleich ist der Verkabelungsaufwand viel geringer als bei einer sternförmigen Verbindung der Basisstation 2 mit allen weiteren Teilnehmern.

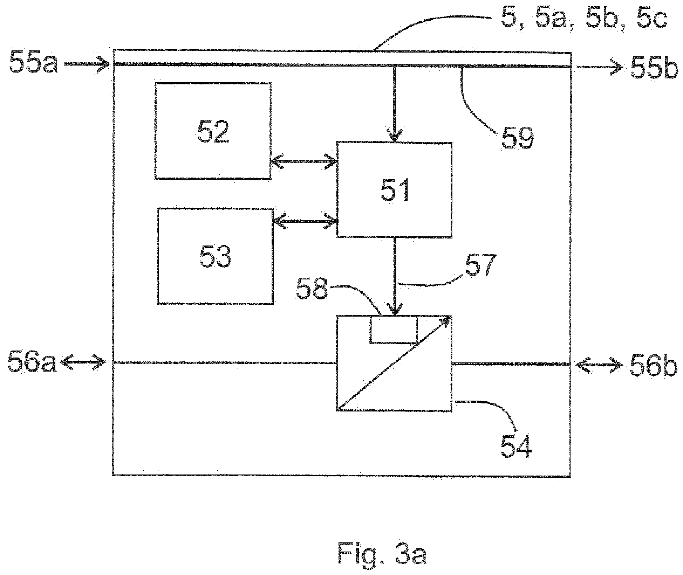

Figur 3a verdeutlicht den inneren Aufbau eines Kanalemulator 5, 5a, 5b, 5c. Ein Mikroprozessor oder FPGA 51 erhält aus einer Synchronisationsleitung 59 eine Information über den Takt der Zeitschlitze. Diese Leitung 59 ist über einen Eingang 55a in den Kanalemulator 5, 5a, 5b, 5c eingerührt und durch einen Ausgang 55b wieder aus ihm herausgeführt. Vor dem Beginn eines jeden Zeitschlitzes wird aus einem Speicher 52 abgerufen, welcher Teilnehmer 2a bis 2f das Medium 3a, 3b, 3c während des Zeitschlitzes 4 nutzt (in den Uplink-Kanälen) bzw. für weichen Teilnehmer 2a bis 2f ein während dieses Zeitschlitzes 4 durch die zentrale Basisstation 2 übermittelte Nachricht bestimmt ist (im Downlink-Kanal 3d). Mit dieser Information wird aus einem weiteren Speicher 53 ein Wert 57 für die Abschwächung bzw. Verstärkung abgerufen. Die Verstärker können bidirektional bzw. in der Richtung umschaltbar ausgeführt werden. Dieser Wert wird durch ein Stellglied 58 am Abschwächen 54 mit variabler Abschwächung eingestellt. Der Abschwächen 54 wirkt bidirektional zwischen den Anschlüssen 56a und 56b. Die Verstärker bzw. Abschwächer können mit zusätzlichen Phasenschiebern oder variablen Laufzeitleitungen kombiniert werden.

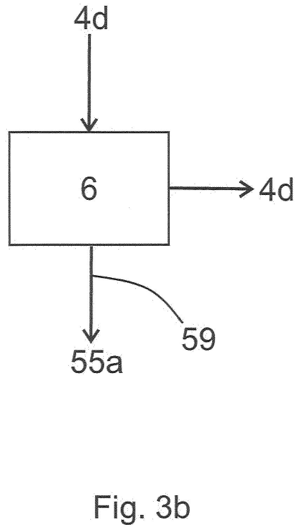

Figur 3b verdeutlicht den inneren Aufbau eines Moduls zur Ableitung der zeitlichen Synchronisation aus der Kommunikation auf einem Frequenzband. Dies kann walweise auf einem Uplink- wie auch auf dem Downlink-Frequenzband erfolgten. Hier wurde das Downlink-Frequenzband 4d genutzt. Dieses wird unbeeinflusst wieder ausgegeben. Zusätzlich wird das Synchronisationsignal auf Leitung 59 an die Anschlüsse 55a ausgegeben.

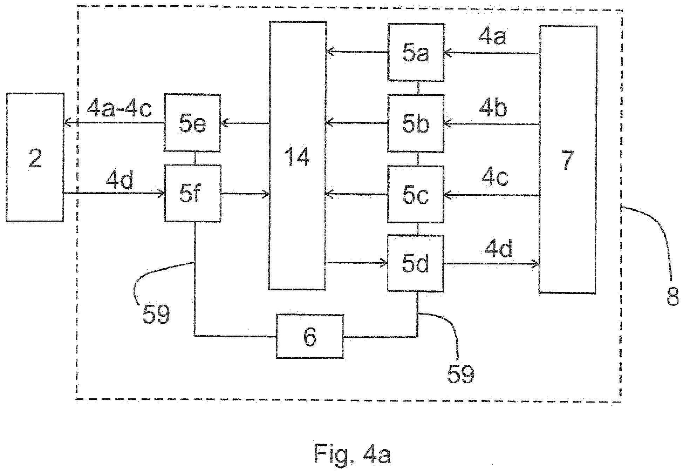

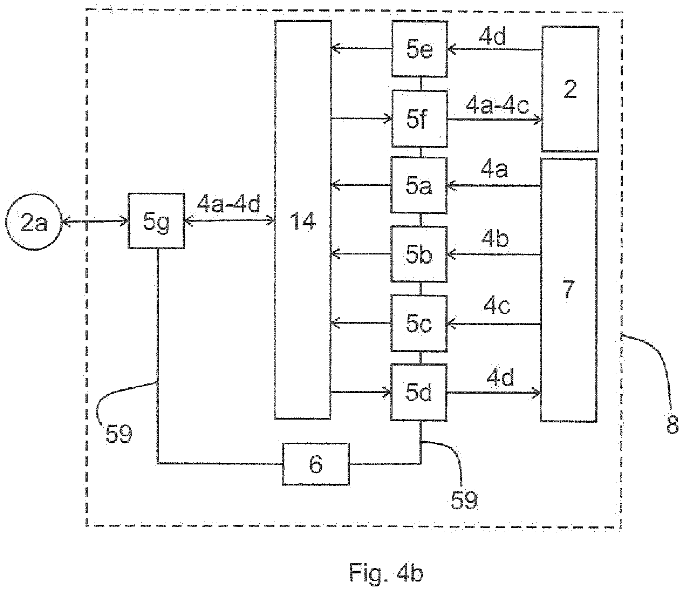

Die Figuren 4a und 4b zeigen Prüfgerät gemäß der Erfindung, in denen der Kanalemulator 5 mit einem Modul 7 zur Erzeugung und/oder zum Empfang von Testsignalen kombiniert ist. In Figur 4a ist das Prüfgerät 8 zum Test der zentralen Basisstation 2 ausgebildet. Daher ist das Modul 7 so ausgebildet, dass es sich wie ein idealer Teilnehmer 2a bis 2f verhält. Die Kanalemulatoren 5a bis 5f werden durch das Modul 6 über Leitung 59 zeitlich synchronisiert. Alle Kanalemulatoren 5a bis 5d sind an einem gemeinsamen Splitter und Kombinierer 14 zusammengeführt, der wiederum über zwei weitere Kanalemulatoren 5e und 5f mit der Basisstation 2 verbunden ist.

In dem in Figur 4a gezeigten Ausführungsbeispiel weist die Basisstation 2 zwei Antennenanschlüsse auf: einen für den Uplink von den Teilnehmern 2a bis 2f und einen für den Downlink zu den Teilnehmern 2a bis 2f. Dementsprechend werden auf dem ersten Anschluss nur die Uplink-Frequenzbänder 4a, 4b und 4c in Richtung der Basisstation 2 übertragen. Auf dem zweiten Anschluss wird nur das Downlink-Frequenzband 4d in Richtung der - durch das Modul 7 emulierten - Teilnehmer 2a bis 2f übertragen. Das Prüfgerät 8 emuliert das Verhalten der Kommunikationsteilnehmer dahingehend, dass das Modul 7 Funktelegramme, wie sie sonst von den Teilnehmern 2a-2f gesendet würden, auf den Uplink-Frequenzbändern 4a bis 4c erzeugt und über Kanalemulatoren 5a-5c der Basisstation 2 zuleitet. Dabei erfolgt auch eine Reaktion auf Signale von der Basisstation, die auf dem Downlink-Frequenzband 4d über den Kanalemulator 5d an das Modul 7 weitergeleitet werden. Sämtliche Kanalemulatoren 5a bis 5f sind über das Modul 6 und die Leitung 59 miteinander synchronisiert.

In Figur 4b ist das Prüfgerät 8 zum Test eines Teilnehmers 2a ausgebildet. Es umfasst daher nicht nur ein Modul 7, das sich wie ein idealer Teilnehmer 2b bis 2f verhält, sondern auch die zentrale Basisstation 2. Die Basisstation 2 ist über einen weiteren Kanalemulator 5e, der für das Downlink-Frequenzband 4d zuständig ist, sowie einen weiteren Kanalermulator 5f, der für die Uplink-Frequenzbänder 4a bis 4c zuständig ist, mit dem Splitter und Kombinierer 14 verbunden. Der Teilnehmer 2a ist über einen weiteren Kanalemulator 5g an den Splitter und Kombinierer 14 angeschlossen. Die Basisstation 2, das Modul 7 und der zu prüfende Teilnehmer 2a können untereinander nur durch Vermittlung über die Kanalemulatoren 5a bis 5g kommunizieren. Alle Kanalemulatoren 5a bis 5g werden durch das Modul 6 über Leitung 59 zeitlich synchronisiert.

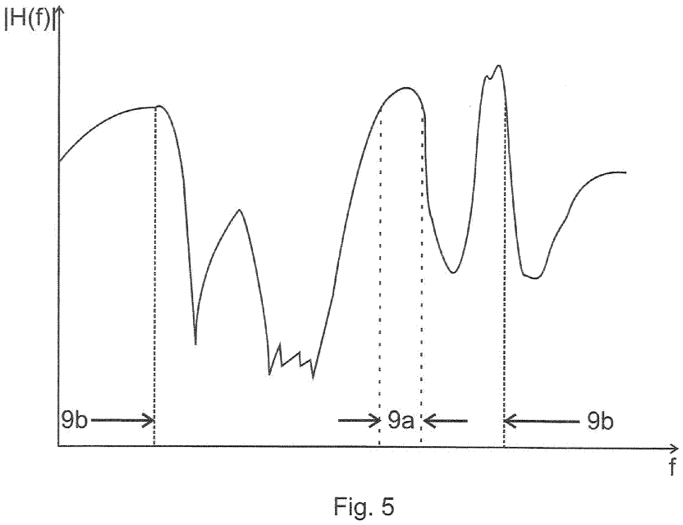

Figur 5 verdeutlicht den Unterschied zwischen einem schmalbandigen Funkkanal 9a und einem breitbandigen Funkkanal 9b. Aufgetragen ist der Betrag der komplexwertigen Übertragungsfunktion H(f) über der Frequenz f. Der schmalbandige Kanal 9a zeichnet sich dadurch aus, dass diese Übertragungsfunktion in seinem Bereich nur vergleichsweise schwach variiert, so dass der Kanal als zu sich selbst ähnlich bzw. frequenzflach anzusehen ist. Er kann daher ohne Kanatentzerrer benutzt werden. Über die Bandbreite des breitbandigen Kanals 9b hingegen variiert die Übertragungsfunktion sehr stark.

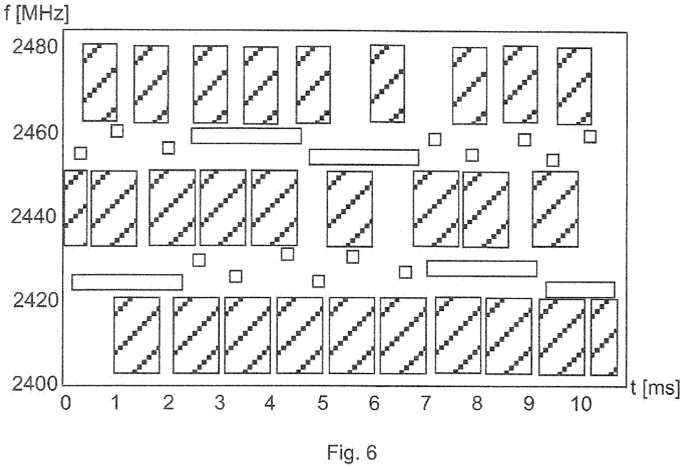

Figur 6 verdeutlicht einen Praxistest des Kommunikationssystems 1 im ISM-Band zwischen 2400 und 2500 MHz. Aufgetragen ist die Frequenz f über der Zeit t. Die schraffierten Kästen geben die Frequenzbeanspruchung durch drei parallel betriebene WLAN-Netze wieder. Die nicht schraffierten Kästen geben die Frequenzbeanspruchung durch das Kommunikationssystem 1 wieder. Dabei rühren die langen Pakete von der zentralen Basisstation 2 her und die kurzen (quadratischen) von den übrigen Teilnehmern 2a bis 2f. Wegen der starken Frequenzbeanspruchung durch die drei WLAN-Netze konnte bei diesem Praxistest nicht das gesamte Kommunikationssystem aus über 100 Teilnehmern 2a bis 2f zum Einsatz kommen. Der Kanalemulator mit der erfindungsgemäß vorgesehenen Umschalteinrichtung 51, 52, 53 ordnet jedem Paket einen individuellen Dämpfungswert zu. Die Pakete der Teilnehmer 2, 2a bis 2f sind im Vergleich zu den WLAN-Paketen schmalbandig.

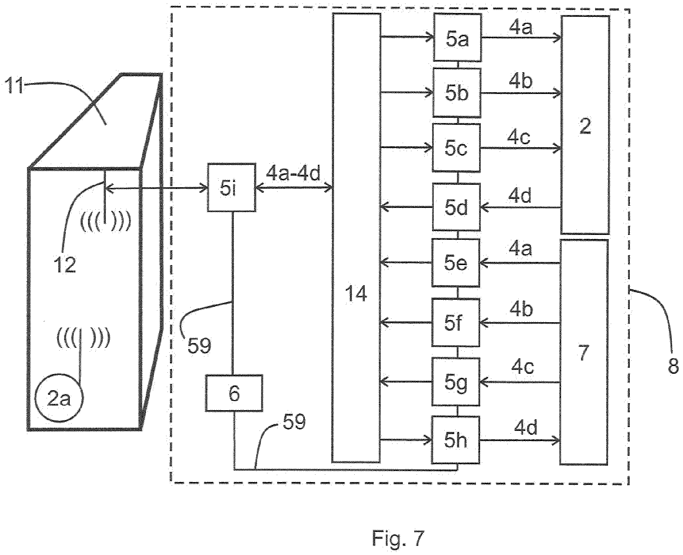

Figur 7 zeigt ein weiteres Ausführungsbeispiel des erfindungsgemäßen Prüfgerät 8. Das Prüfgerät 8 dient zum Test eines Teilnehmers 2a (Sensor oder Aktor). Da dieser konkrete Teilnehmer keine zugängliche Antennenbuchse aufweist, befindet er sich in einer Modenverwirbelungskammer 11. Über die darin befindliche Antenne 12 ist er per Funk mit dem Prüfgerät 8 verbunden.

Das Prüfgerät 8 enthält eine Basisstation 2 sowie ein weiteres Modul 7, das eine Vielzahl an verschiedene weitere Teilnehmer 2a-2f emulieren kann. Es ist vorgesehen, dass die Basisstation 2 auf ein oder mehreren, hier drei, Uplink-Frequenzbändern 4a, 4b und 4c Daten von einer Vielzahl in Modul 7 emulierten Teilnehmern sowie des gerade zu testeten Teilnehmers 2a, in der Kammer 11, empfängt und diesen Teilnehmern auf einem Downlink-Frequenzband 4d antwortet. Die Basisstation ist über drei Kanalemulatoren 5a, 5b und 5c, die jeweils für eines der Uplink-Frequenzbänder 4a, 4b und 4c zuständig sind, sowie über einen weiteren Kanalemulator 5d, der für das Downlink-Frequenzband 4d zuständig ist, mit dem Kombinierer 14 verbunden. Die Pfeile geben die Richtungen der Datenströme an. Das Modul 7 sendet im Namen der von ihm emulierten Teilnehmer 2b-2f auf den drei Uplink-Frequenzbändern 4a, 4b und 4c, auf die sich diese emulierten Teilnehmer verteilen. Für jedes dieser drei Uplink-Frequenzbänder 4a, 4b und 4c ist jeweils ein separater Kanalemulator 5e, 5f, 5g, vorgesehen, über die das Signal in den Kombinierer 14 gelangt. Über den Kanalemulator 5h wird das Downlink-Frequenzband 4d vom Kombinierer 14 in das Modul 7 geführt. Dabei werden unterschiedliche Entfernungen und Ausbreitungsbedingungen zu den vom Modul 7 emulierten Teilnehmern emulgiert, indem die Dämpfungen der Kanalenaulatoren 5a-5h individuell für jeden dieser emulierten Teilnehmer eingestellt werden.

Die gesamten Signale an Kombinierer 14 werden über den Kanalemulator 5i der Antenne 12, und damit dem getesteten Teilnehmer 2a in der Kammer 11, zugeleitet. Umgekehrt passiert die Antwort des Teilnehmers 2a diesen Kanalemulator 5i und den Kombinierer 14. Von dort gelangt die Antwort über einen der Kanalemulatoren 5a, 5b oder 5c in die Basisstation 2. Dabei wird mit Modul 6 das zeitliche Synchronisationssignal für Leitung 59 erzeugt und an alle Kanalemulatoren weitergeleitet.

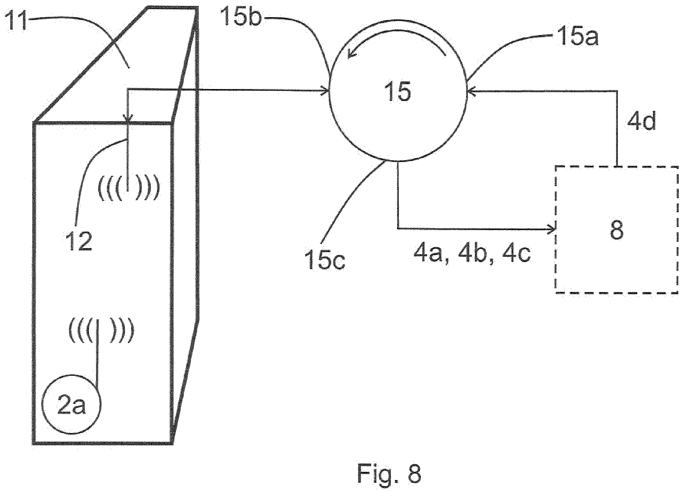

Figur 8 verdeutlicht schematisch, wie ein Zirkulator 15 den Eingang und den Ausgang eines Prüfgeräts 8 voneinander entkoppeln kann, um gegenseitige Störungen zu vermeiden. Getestet wird wieder ein Teilnehmer 2a, der sich in der Modenverwirbelungskammer 11 befindet. Der Ausgang des Prüfgeräts 8 ist mit dem ersten Anschluss 15a des Zirkulators 15 verbunden. Der zweite Anschluss 15b des Zirkulators 15 ist mit der Antenne 12 in der Modenverwirbelungskammer 11 verbunden. Der dritte Anschluss 15c des Zirkulators 15 ist mit dem Eingang des Prüfgeräts 8 verbunden.

Der Zirkulator 15 gibt ein Signal, das an einem seiner Anschlüsse 15a, 15b, 15c eingeht, jeweils nur an den in Pfeilrichtung zyklisch nächsten Anschluss weiter. Ein Downlink-Signal auf dem Downlink-Frequenzband 4d aus dem Ausgang des Prüfgerät 8, das am Anschluss 15a eingeht, wird daher nur an den Anschluss 15b und die Antenne 12 weitergeleitet, nicht jedoch an den Anschluss 15c und damit an den Eingang des Prüfgeräts 8. Umgekehrt wird die Antwort aus der Modenverwirbelungskammer 11 auf einem der Uplink-Frequenzbänder 4a, 4b oder 4c, die über den Anschluss 15b eingeht, nur über den Anschluss 15c an den Eingang des Prüfgeräts 8 weitergeleitet, nicht jedoch über den Anschluss 15a an dessen Ausgang.

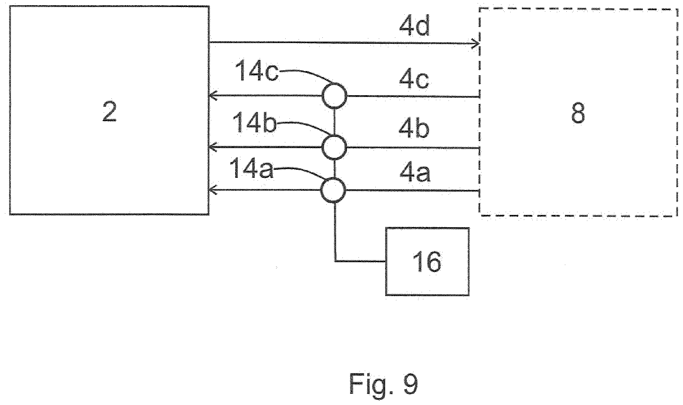

Figur 9 verdeutlicht das Aufprägen zusätzlicher Störungen auf stimulierte Kommunikationswege mittels Kombinierern 14a-14c. Mit dem Prüfgerät 8 wird in dem in Figur 9 gezeigten Testaufbau die Basisstation 2 getestet. Diese sendet auf einem Downlink -Frequenzband 4d Daten unmittelbar an das Prüfgerät 8 und die darin emulierten Teilnehmer 2a-2f. Sie empfängt von diesen emulierten Teilnehmern Daten auf drei separaten Elplink-Frequenzbändern 4a, 4b und 4c. In die Leitungen, die der Basisstation diese Uplink-Frequenzbänder 4a, 4b und 4c zuführen, sind Kombinierer 14a, 14b bzw. 14c eingeschleift. Über diese Kombinierer 14a, 14b, 14c wird jeweils ein zusätzliches Störsignal aus einem Signalgenerator 16 eingekoppelt. Damit können der Einfluss von Störern wie WLAN oder Bluetooth aber auch einfaches Signalrauschen auf den Frequenzbändern emulgiert werden.

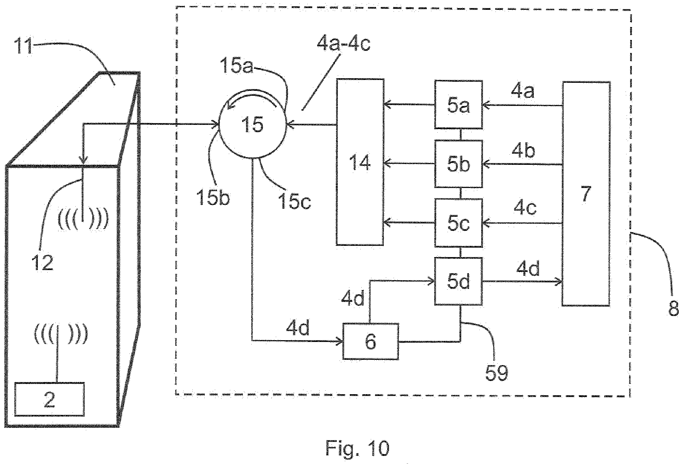

Figur 10 zeigt ein weiteres Ausführungsbeispiel der Erfindung, bei dem die Basisstation 2 das zu testende Gerät ist. Die Basisstation 2 verfügt über keine zugängliche Antennenbuchse und ist daher in der Modenverwirbelungskammer 11 eingeschlossen. Sie kommuniziert über die in der Kammer 11 befindliche Antenne 12 mit dem Prüfgerät 8. Das Prüfgerät 8 enthält ein Modul 7, das die Vielzahl der Teilnehmer 2a-2f des Kommunikationssystems 1 emulieren kann. Die emulierten Teilnehmer senden auf drei Uplink-Frequenzbändern 4a, 4b und 4c, die jeweils durch einen eigenen Kanalemulator 5a, 5b bzw. 5c geleitet und am Kombinierer 14 zusammengeführt werden. Die emulierten Teilnehmer empfangen Daten von der Basisstation 2 über einen weiteren Kanalemulator 5d in einem Downlink-Frequenzband 4d.

Das Prüfgerät 8 enthält einen Zirkulator 15, um die Uplink-Frequenzbänder 4a, 4b und 4c vom Downlink-Frequenzband 3d zu entkoppeln. Der Kombinierer 14 ist am ersten Anschluss 15a des Zirkulators 15 angeschlossen. Funktelegramme, die auf den Uplink-Frequenzbändern 4a, 4b und 4c gesendet werden, werden somit über den nächsten Anschluss 15b und die Antenne 12 in der Kammer 11 an die Basisstation weitergegeben. Sie werden jedoch nicht an den dritten Anschluss 15c weitergegeben, der das Downlink-Frequenzband 4d führt. Für die Synchronisation aller Kanalemulatoren 5a-5d wird das Downlink-Signal 4d verwendet. Das Modul 6 extrahiert, wie in Figur 3b dargestellt, dieses Synchronisationssignal und gibt es an die Leitung 59 weiter, die alle Kanalemulatoren 5a-5d miteinander verbindet. Zugleich wird das Downlink-Signal unverändert an den dafür zuständigen Kanalemulator 5d weitergegeben.

Daten von der Basisstation 2, die am Anschluss 15b auf dem Downlink-Frequenzband 4d eingehen, werden nur an den Anschluss 15c weitergegeben, nicht jedoch an den Anschluss 15a, der die Uplink-Frequenzbänder 4a, 4b und 4c führt. Die Abschwächung in den Kanalemulatoren 5a bis 5c wird vor Beginn eines jeden Zeitschlitzes, in dem das entsprechende Uplink-Frequenzband 4a, 4b, 4c von einem neuen emulierten Teilnehmer 2a-2f genutzt wird, neu eingestellt, um die Entfernung und sonstigen Ausbreitungsbedingungen von diesem Teilnehmer 2a-2f bis zur Basisstation 2 zu emulieren. Umgekehrt wird die Abschwächung im Kanalemulator 5d danach eingestellt, für welchen der vom Modul 7 emulierten Teilnehmer die im jeweils nächsten Zeitschlitz von der Basisstation 2 im Downlink-Frequenzband 4d gesendeten Daten bestimmt sind. Auf diese Weise können die Ausbreitungsbedingungen zwischen jedem emulierten Teilnehmer und der Basisstation bidirektional emuliert werden.

### Bezugszeichenliste

- 1: Kommunikationssystem
- 2: Basisstation
- 2a-2f: weitere Teilnehmer des Kommunikationssystems 1
- 3a-3d: Medium, busförmige Leitung, Hochfrequenzleitung bzw. Funkkanal
- 4a-4d: Frequenzbänder
- 44: Zeitschlitz
- 4g: Schutzintervall zwischen Zeitschlitzen 44
- 5, 5a-5i: Kanalemulatoren
- 51, 52, 53: Umschalteinrichtung im Kanalemulator 5, 5a-5i
- 51: Mikroprozessor oder FPGA
- 52: Speicher, für welchen Teilnehmer das Medium reserviert ist
- 53: Speicher, welcher Teilnehmer welche Abschwächung benötigt
- 54: variabler Abschwächen bzw. Verstärker
- 55a, 55b: Anschlüsse der Synchronisationsleitung 59
- 56a, 56b: Anschlüsse des Kanalemulators 5, 5a-5i für das Nutzsignal
- 58: Stellglied mit PIN-Diode
- 59: Synchronisationsleitung
- 6: Modul zur Generierung des Synchronisationssignales
- 7: Modul zur Generierung von Testdaten
- 8: Prüfgerät
- 9a: schmalbandiger Funkkanal
- 9b: breitbandige Funkkanal
- 10: Prüfanordnung
- 11: Modenverwirbelungskammer
- 12: Antenne in der Modenverwirbelungskammer 11
- 14, 14a-14c: Kombinierer, Splitter oder Leistungsteiler
- 15: Zirkulator
- 15a, 15b, 15c: Anschlüsse des Zirkulators

## Patentansprüche

1. Kanalemulator (5, 5a-5i) für ein TDMA- oder F/TDMA-Kommunikationssystem (1) mit einer Vielzahl von Teilnehmern (2, 2a-2f), in dem mindestens ein Medium (3a-3d) in Zeitschlitze (44) unterteilt ist, wobei das Medium (3a-3d) für die Dauer eines jeden Zeitschlitzes (44) von genau einem Teilnehmer (2, 2a-2f) nutzbar ist, umfassend mindestens einen Abschwächer (54) mit variabler Abschwächung und/oder mindestens einen Verstärker (54) mit variabler Verstärkung,
**dadurch gekennzeichnet, dass**
eine Umschalteinrichtung (51, 52, 53) vorgesehen ist, die vor Beginn eines jeden Zeitschlitzes (44) dem Teilnehmer (2, 2a-2f), der das Medium (3a-3d) während des Zeitschlitzes (44) nutzt, und/oder dem Teilnehmer, für den eine während dieses Zeitschlitzes (44) übermittelte Nachricht bestimmt ist, einen Wert (57) für die Abschwächung bzw. Verstärkung zuordnet und am Abschwächen bzw. Verstärker (54) einstellt.

2. Kanalemulator (5, 5a-5i) nach Anspruch 1, **dadurch gekennzeichnet, dass** die Zeitdauer, die die Umschalteinrichtung (51, 52, 53) für das Zuordnen und Einstellen benötigt, höchstens 5 µs, bevorzugt höchstens 3 µs, beträgt.

3. Kanalemulator (5, 5a-5i) nach einem der Ansprüche 1 bis 2, **dadurch gekennzeichnet, dass** die Umschalteinrichtung (51, 52, 53) mindestens eine PIN-Diode (58), einen FET-Schalter, hybride Ausführungsformen hiervon, und/oder einen MEMS-Schalter enthält.

4. Kanalemulator (5, 5a-5i) nach einem der Ansprüche 1 bis 3, **dadurch gekennzeichnet, dass** er einen Eingang (55a) für ein Synchronisationssignal (59), das den Takt der Zeitschlitze (44) im Kommunikationssystem (1) vorgibt, und/oder einen Ausgang (55b) für ein solches Synchronisationssignal (59) zur Vorgabe dieses Takts an mindestens ein anderes Gerät (2, 2a-2f, 7) aufweist.

5. Kanalemulator (5; 5a-5i) nach einem der Ansprüche 1 bis 4, **dadurch gekennzeichnet, dass** ein Modul (6) vorgesehen ist, das ein Synchronisationssignal (59) durch das Abhören eines Mediums ermittelt.

6. Prüfgerät (8) für einen Teilnehmer (2, 2a-2f) an einem TDMA- oder F/TDMA-Kommunikationssystem (1), **dadurch gekennzeichnet, dass** es mindestens einen Kanalemulator (5, 5a-5i) nach einem der Ansprüche 1 bis 5 sowie mindestens ein Modul (7) zur Erzeugung und/oder zum Empfang von Testsignalen umfasst, wobei der Takt der Zeitschlitze (44) zwischen diesem Modul (7) und dem Kanalemulator (5, 5a-5i) synchronisiert ist und das Modul (7) über den Kanalemulator (5, 5a-5i) mit dem zu prüfenden Teilnehmer (2, 2a-2f) verbindbar ist.

7. Prüfgerät (8) nach Anspruch 6, **dadurch gekennzeichnet, dass** es eine absorbierende Messkammer und/oder eine Modenverwirbelungskammer (11) aufweist, über die der Kanalemulator (5, 5a-5i) per Funk mit dem zu prüfenden Teilnehmern (2, 2a-2f) verbindbar ist.

8. Prüfgerät (8) nach einem der Ansprüche 6 bis 7, **dadurch gekennzeichnet, dass** es mehrere Kanalemulatoren (5, 5a-5i) und mindestens einen Kombinierer, Splitter oder Koppler (14, 14a-14c) und/oder Zirkulator (15) aufweist, über den die Kanalemulatoren (5, 5a-5i) gemeinsam mit dem zu prüfenden Teilnehmer (2, 2a-2f) verbindbar sind.

9. Prüfanordnung (10) für ein TDMA- und/oder F/TDMA-Kommunikationssystem (1), welches einen zentralen Teilnehmer (2) aufweist, der mit einer Vielzahl weiterer Teilnehmer (2a-2f) bidirektional kommuniziert, **dadurch gekennzeichnet, dass** mindestens ein Kanalemulator (5, 5a-5i) nach einem der Ansprüche 1 bis 5 und/oder mindestens ein Prüfgerät (8) nach einem der Ansprüche 6 bis 8 zwischen den zentralen Teilnehmer (2) und mindestens einen weiteren Teilnehmer (2a-2f) geschaltet ist.

10. Prüfanordnung (10) nach Anspruch 9, **dadurch gekennzeichnet, dass** der Kanalemulator (5, 5a-5i) und/oder das Prüfgerät (8) zwischen den zentralen Teilnehmern (2) und mindestens zwei weitere Teilnehmer (2a-2f) geschaltet ist und dass die mindestens zwei weiteren Teilnehmer (2a-2b, 2c-2d, 2e-2f) untereinander mit einer Leitung (3a-3d) verbunden sind und der Kanalemulator (5, 5a-5i) bzw. das Prüfgerät (8) zwischen den zentralen Teilnehmer (2) und die Leitung (3a-3d) geschaltet ist.

11. Prüfanordnung (10) nach einem der Ansprüche 9 bis 10, **dadurch gekennzeichnet, dass** das Kommunikationssystem (1) ein schmalbandiges (9a) Funksystem ist.

12. Verfahren zum Betreiben einer Prüfanordnung (10) nach einem der Ansprüche 9 bis 11, **dadurch gekennzeichnet, dass** die Einstellung der Abschwächung bzw. Verstärkung (57) durch die Umschalteeinheit (51, 52, 53) während eines Schutzintervalls (4g) zwischen zwei Zeitschlitzen (44) erfolgt, innerhalb dessen keine Nutzdaten über das Medium (3a-3f) übertragen werden.

## Claims

1. A channel emulator (5, 5a-5i) for a TDMA or F/TDMA communication system (1) having a plurality of subscribers (2, 2a-2f), in which at least one medium (3a-3d) is divided into time slots (44), wherein the medium (3a-3d) is usable for the duration of each time slot (44) by exactly one subscriber (2, 2a-2f), comprising at least one attenuator (54) with variable attenuation and/or at least one amplifier (54) with variable amplification,
**characterized in that**
a switching device (51, 52, 53) is provided, which, before the start of each time slot (44), assigns a value (57) for the attenuation or amplification to the subscriber (2, 2a-2f), who uses the medium (3a-3d) during the time slot (44), and/or to the subscriber for whom a message transmitted during said time slot (44) is destined and which adjusts the value (57) at the attenuator or amplifier (54).

2. The channel emulator (5, 5a-5i) according to claim 1, **characterized in that** the time duration that is required by the switching device (51, 52, 53) for the assigning and adjusting is at most 5 µs, preferably at most 3 µs.

3. The channel emulator (5, 5a-5i) according to any of claims 1 to 2, **characterized in that** the switching device (51, 52, 53) includes at least a PIN diode (58), a FET switch, hybrid embodiments thereof, and/or a MEMS switch.

4. The channel emulator (5, 5a-5i) according to any of claims 1 to 3, **characterized in that** it comprises an input (55a) for a synchronization signal (59), which specifies the clock of the time slots (44) in the communication system (1), and/or an output (55b) for such a synchronization signal (59) for providing this clock to at least one other device (2, 2a-2f, 7).

5. The channel emulator (5; 5a-5i) according to any of claims 1 to 4, **characterized in that** a module (6) is provided, which determines a synchronization signal (59) by intercepting a medium.

6. A test device (8) for a subscriber (2, 2a-2f) of a TDMA or F/TDMA communication system (1), **characterized in that** it comprises at least one channel emulator (5, 5a-5i) according to any of claims 1 to 5 as well as at least one module (7) for generating and/or receiving test signals, wherein the clock of the time slots (44) is synchronized between said module (7) and the channel emulator (5, 5a-5i), and wherein the module (7) is connectable to the subscriber (2, 2a-2f) to be tested via the channel emulator (5, 5a-5i).

7. The test device (8) according to claim 6, **characterized in that** it comprises an absorbing measurement chamber and/or an electromagnetic reverberation chamber (11), via which the channel emulator (5, 5a-5i) is connectable by radio with the subscriber (2, 2a-2f) to be tested.

8. The test device (8) according to any of claims 6 to 7, **characterized in that** it comprises several channel emulators (5, 5a-5i) and at least one combiner, splitter or coupler (14, 14a-14c) and/or circulator (15), via which the channel emulators (5, 5a-5i) can be jointly connected with the subscriber (2, 2a-2f) to be tested.

9. A test arrangement (10) for a TDMA and/or F/TDMA communication system (1) comprising a central subscriber (2), who communicates bidirectionally with a plurality of further subscribers (2a-2f), **characterized in that** at least one channel emulator (5, 5a-5i) according to any of claims 1 to 5 and/or at least one test device (8) according to any of claims 6 to 8 is connected between the central subscriber (2) and at least one further subscriber (2a-2f).

10. The test arrangement (10) according to claim 9, **characterized in that** the channel emulator (5, 5a-5i) and/or the test device (8) is connected between the central subscriber (2) and at least two further subscribers (2a-2f), wherein the at least two further subscribers (2a-2b, 2c-2d, 2e-2f) are connected to one another via a wire (3a-3d), and wherein the channel emulator (5, 5a-5i) and/or the test device (8), respectively, is connected between the central subscriber (2) and the wire (3a-3d).

11. The test arrangement (10) according to any of claims 9 to 10, **characterized in that** the communication system (1) is a narrow-band (9a) radio system.

12. A method for operating a test arrangement (10) according to any of claims 9 to 11, **characterized in that** the setting of the attenuation or amplification (57) is performed by the switching device (51, 52, 53) during a guard interval (4g) between two time slots (44) during which no user data is transmitted over the medium (3a-3f).

## Revendications

1. Émulateur de canal (5, 5a-5i) pour un système de communication TDMA ou F/TDMA (1) avec une pluralité d'abonnés (2, 2a-2f), dans lequel au moins un support est divisé (3a-3d) en intervalles de temps (44), dans lequel le support (3a-3d) est utilisable pour la durée d'un chaque intervalle de temps (44) d'exactement un abonné (2, 2a-2f), comprenant au moins un atténuateur (54) avec une atténuation variable et/ou au moins un amplificateur (54) avec amplification variable,
**caractérisé en ce que**
une installation de commutation (51, 52, 53) est prévue, qui, avant le début de chaque intervalle de temps, attribue une valeur (57) pour l'atténuation ou l'amplification à l'abonné (2, 2a-2f) qui utilise le support (3a-3d) au cours de l'intervalle de temps (44), et/ou à l'abonné auquel une information transmise durant cet intervalle de temps (44) est destinée et apparaît sur l'atténuateur ou sur l'amplificateur (54).

2. Émulateur de canal (5, 5a-5i) selon la revendication 1, **caractérisé en ce que** la durée de temps nécessaire à l'installation de commutation (51, 52, 53) pour l'attribution et le réglage est au maximum de 5 µs, préférablement au maximum de 3 µs.

3. Émulateur de canal (5, 5a-5i) selon l'une quelconque des revendications 1 à 2, **caractérisé en ce que** l'installation de commutation (51, 52, 53) contient au moins une diode PIN (58), un commutateur FET, des modes de réalisation hybrides de ceux-ci, et/ou un commutateur MEMS.

4. Émulateur de canal (5, 5a-5i) selon l'une quelconque des revendications 1 à 3, **caractérisé en ce qu'**il comporte une entrée (55a) pour un signal de synchronisation (59), qui fournit la cadence des intervalles de temps (44) dans le système de communication (1), et/ou une sortie (55b) pour un tel signal de synchronisation (59) pour fournir cette cadence à au moins un autre dispositif (2, 2a-2f, 7).

5. Émulateur de canal (5 ; 5a-5i) selon l'une quelconque des revendications 1 à 4, **caractérisé en ce qu'**un module (6) est prévu, qui détermine un signal de synchronisation (59) par l'interception d'un support.

6. Dispositif de test (8) pour un abonné (2, 2a-2f) sur un système de communication TDMA ou F/TDMA (1), **caractérisé en ce qu'**il comprend au moins un émulateur de canal (5, 5a-5i) selon l'une quelconque des revendications 1 à 5 ainsi qu'au moins un module (7) pour la génération et/ou la réception de signaux de test, dans lequel la cadence des intervalles de temps (44) entre ledit module (7) et l'émulateur de canal (5, 5a-5i) est synchronisée et le module (7) peut être relié à l'abonné à tester (2, 2a-2f) par l'intermédiaire de l'émulateur de canal (5, 5a-5i).

7. Dispositif de test (8) selon la revendication 6, **caractérisé en ce qu'**il présente une chambre de mesure absorbante et/ou une chambre de réverbération électromagnétique (11) à travers laquelle l'émulateur de canal (5, 5a-5i) peut être relié par radio à l'abonné à tester (2, 2a -2f).

8. Dispositif de test (8) selon l'une quelconque des revendications 6 à 7, **caractérisé en ce qu'**il présente une pluralité d'émulateurs de canal (5, 5a-5i) et au moins un combinateur, un diviseur ou un coupleur (14, 14a-14c) et/ou un circulateur (15), par lequel les émulateurs de canal (5, 5a-5i) peuvent être reliés entre eux avec l'abonné à tester (2, 2a-2).

9. Configuration de test (10) pour un système de communication TDMA ou F/TDMA (1) qui présente un abonné central (2), qui communique de façon bidirectionnelle avec une pluralité d'autres abonnés (2a-2f), **caractérisé en ce qu'**au moins un émulateur de canal (5, 5a-5i) selon l'une quelconque des revendications 1 à 5 et/ ou au moins un dispositif de test (8) selon l'une quelconque des revendications 6 à 8 est couplé entre l'abonné central (2) et au moins un abonné supplémentaire (2a-2f).

10. Configuration de test (10) selon la revendication 9, **caractérisé en ce que** l'émulateur de canal (5, 5a-5i) et/ou le dispositif de test (8) est couplé entre l'abonné central (2) et au moins deux autres abonnés (2a-2f) et **en ce que** les au moins deux abonnés supplémentaires (2a-2b, 2c-2d, 2e-2f) sont connectés l'un à l'autre par une ligne (3a-3d) et l'émulateur de canal (5, 5a-5i) ou le dispositif de test (8) est commuté entre l'abonné central (2) et la ligne (3a-3d).

11. Configuration de test (10) selon l'une quelconque des revendications 9 à 10, **caractérisé en ce que** le système de communication (1) est un système radio à bande étroite (9a).

12. Procédé pour le fonctionnement d'une configuration de test (10) selon l'une quelconque des revendications 9 à 11, **caractérisé en ce que** le réglage de l'atténuation ou de l'amplification (57) par l'unité de commutation (51, 52, 53) est effectué pendant un intervalle de garde (4g) entre deux intervalles de temps (44) et au cours duquel aucune donnée utile n'est transmise par l'intermédiaire du support (3a-3f).
